# EUROPÄISCHE PATENTSCHRIFT

(11) **EP 0 713 721 B1**
(45) Veröffentlichungstag und Bekanntmachung des Hinweises auf die Patenterteilung: **17.02.1999**
(21) Anmeldenummer: 95118285.6
(22) Anmeldetag: 21.11.1995
(51) Int. Cl.: B01D 46/24, B01D 46/52, B01D 29/11

(54) **Filteranordnung**
Filter arrangement
Ensemble de filtres

(30) Priorität: 23.11.1994 DE 4441608
(43) Veröffentlichungstag der Anmeldung: 29.05.1996
(73) Patentinhaber: FILTERWERK MANN & HUMMEL GmbH, 71638 Ludwigsburg (DE)
(72) Erfinder: Erdmannsdörfer, Hans, D-75335 Dobel (DE); Storz, Helmut, D-71726 Benningen (DE); Wagner, Manfred, D-70597 Stuttgart (DE)
(74) Vertreter: Aldag, Wolfgang, Dipl.-Ing.

(56) Entgegenhaltungen:
- EP-A- 0 547 291
- EP-A- 0 650 751
- DE-A- 4 206 519
- DE-U- 7 902 475
- GB-A- 2 163 368
- PATENT ABSTRACTS OF JAPAN vol. 12 no. 33 (C-472) [2880] ,30.Januar 1988 & JP-A-62 183818 (NIPPON DENSO CO LTD) 12.August 1987,

## Beschreibung

Die Erfindung betrifft eine Filteranordnung mit einem hohlzylindrischen Filterelement, das Dichtungen aufweist, die an mindestens einer Stirnseite und an radial innenliegenden Bereichen angeordnet sind. Die Dichtungen bestehen aus einer elastischen Masse, die nach einem Aushärtevorgang eine ausreichende Restelastizität aufweisen.

### Stand der Technik

Bei einem aus der EP-A-0 547 291 bekannten Kraftstoff- und Schmierstofffilter sind solche Dichtungen am Filterelement jeweils zum Deckel und einer Grundplatte hin angeordnet. Auch aus der nicht vorveröffentlichten älteren europäischen Anmeldung EP-A-0 650 751 mit dem Anmeldetag 21.10.1994, dem Veröffentlichungstag 03.05.1995 und den Prioritätstagen 27.10.1993, 07.04.1994 und 09.08.1994 ist eine Filteranordnung bekannt, bei der an den Stirnendseiten des Filterelements elastische Stirnendscheiben angebracht sind. Im Bereich einer Radialdichtung ist hier zusätzlich ein Stützring angeordnet.

Auch aus der GB-A-2 163 368 ist eine Filteranordnung bekannt, bei der eine elastische Endkappe an dem Filterelement angebracht ist. In dieser elastischen Endkappe ist auch hier zusätzlich mindestens ein separater Dichtungsring zu einem Mittelrohr hin eingelassen.

Weiterhin ist bereits eine solche Filteranordnung aus der DE-A-42 06 519 bekannt, bei der ein zick-zack-förmiges, hohlzylindrisches Filterelement mit an den Stirnseiten dichtend abdeckenden Platten, beispielsweise aus Metall, oder mit folienförmigen Dichtmaterialien vorsehen ist. Diese platten- oder folienförmigen Dichtungen ragen radial innen mit einem bestimmten Betrag in den Innenzylinder herein, so daß auch eine Abdichtung zu einem Mittelrohr erreichbar ist.

Schon beim Einfügen der bekannten Filteranordnungen in die Strömungssysteme, beispielsweise für Motorol oder Diesel- bzw. Ottokraftstoff, sind diese Dichtungen hohen Reißspannungen ausgesetzt, so daß immer die Gefahr besteht, daß das Filterelement beim Einsetzen in das Filtergehäuse reißt und damit nicht nur das Dichtmaterial beschädigt, sondern die Filterwirkung ganz außer Kraft gesetzt wird. Weiterhin sind diese Dichtungen auch während des Betriebs durch relativ hohe Temperaturen des zu filternden Mediums, insbesondere bei Motoröl, hohen Beanspruchungen ausgesetzt, die zu einer Minderung der Funktionstüchtigkeit der gesamten Filteranordnung führen kann.

Der Erfindung liegt somit die Aufgabe zugrunde, eine Filteranordnung der eingangs genannten Art so fortzubilden, daß bei einfacher Herstellung eine dauerhafte Funktionstüchtigkeit gewährleistet ist.

### Vorteile der Erfindung

Die erfindungsgemäße Filteranordnung ist in vorteilhafter Weise geeignet, ausgehend von der gattungsgemäßen Art, die gestellte Aufgabe mit den Merkmalen des Hauptanspruchs dadurch zu lösen, daß die elastische Masse der Dichtung aus Nitrilkautschuk und Phenolharz gebildet ist, wobei das Mischungsverhältnis im Bereich von 1 : 0,8 bis 1 : 1,5 liegt.

Besonders vorteilhaft ist, daß eine zusätzlich zur Abdichtung notwendige Maßnahme der Fixierung der zick-zack-förmigen Faltung des hohlzylindrischen Filterelementes mit der Herstellung der Abdichtflächen verbunden werden kann. Die nach einem Aushärteprozeß verbleibende Restelastizität der elastischen Masse ist bestens geeignet, auch bei zu filternden Medien mit relativ hohen Temperaturen, beispielsweise Motoröl mit 170 °C, für einen langen Zeitraum eine ausreichende Dichtwirkung zu gewährleisten. Auch das nach einer gewissen Betriebsdauer notwendigen Austauschen der Filteranordnungen kann auf einfache Weise vorgenommen werden, da aufgrund der elastischen Verbindung ein Entfernen ohne aufwendiges Werkzeug möglich ist. Aufgrund des einfachen Aufbaus der Filteranordnung aus wenigen Materialien kann auch eine einfache Endverwertung der gebrauchten Filteranordnungen, ohne aufwendige Materialtrennung, vorgenommen werden.

Weitere vorteilhafte Ausführungsformen der erfindungsgemäßen Filteranordnung sind in den Unteransprüchen angegeben, wobei insbesondere die Ausbildung der radial innenliegenden Dichtflächen einfach erreichbar ist. Eine optimale Restelastizität läßt sich auch dabei mit den im Hauptanspruch angegebenen Mischungsverhältnissen von Nitrilkautschuk und Phenolharz im Bereich von 1 : 0,8 bis 1 : 1,5 bei der Herstellung der elastischen Masse der Dichtung erreichen.

### Zeichnung

Ein Ausführungsbeispiel der erfindungsgemäßen Filteranordnung wird anhand der Zeichnung erläutert. Es zeigen:
Figur 1 eine Darstellung einer Filteranordnung mit einem teilweise sichtbaren Filterelement und Dichtungen an beiden Stirnseiten und
Figur 2 einen Schnitt durch eine Dichtung an einer Stirnseite der Filteranordnung.

### Beschreibung des Ausführungsbeispiels

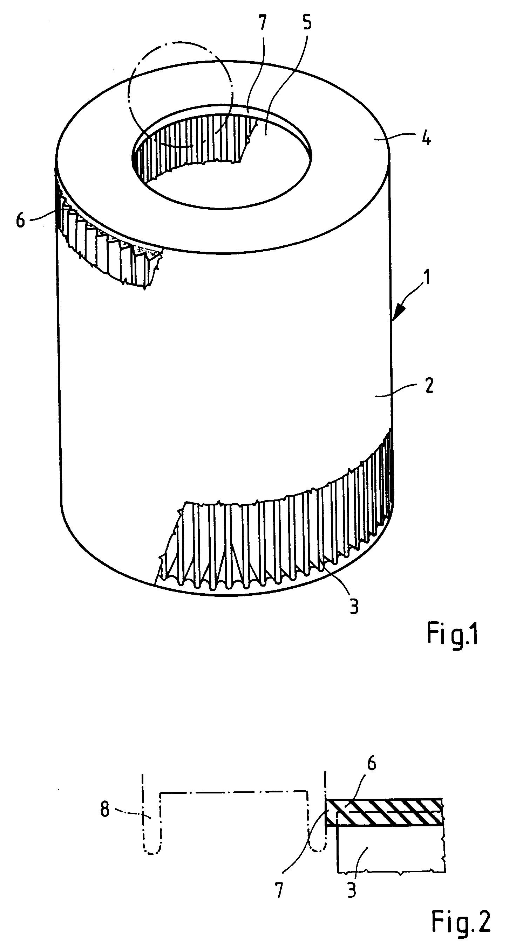

In Figur 1 ist eine hohlzylindrische Filteranordnung 1 gezeigt, bei der in einem Filtergehäuse 2 ein zick-zack-förmig gefaltetes Filterelement 3, beispielsweise aus Filterpapier, vorhanden ist. An der Stirnseite der Filteranordnung 1 ist ein dichtendes Abschlußteil 4 vorhanden, mit dem eine Abdichtung gegenüber einem hier nicht dargestellten Anschlußteil durchgeführt wird.

Solche Filteranordnungen können beispielsweise zur Filterung von Motoröl, Kraftstoff oder von Luft beim Betrieb eines Kraftfahrzeugs mit einem Verbrennungsmotor herangezogen werden. Die jeweiligen Anlagen, in denen die Filteranordnung eingesetzt wird, sind hier, um die Darstellung übersichtlich zu lassen nicht dargestellt. In der Regel erfolgt die Zufuhr des zu filternden Mediums von außen an die Flächen des zick-zack-förmigen Filterelements 3 und die Ableitung des gefilterten Mediums über ein Mittelrohr, das in eine innere, konzentrische Öffnung 5 des Abschlußteils 4 dichtend eingefügt wird. Eine solche Einrichtung mit einer bekannten Filteranordnung ist beispielsweise im deutschen Gebrauchsmuster DE-U-18 51 221 beschrieben.

Beim in der Figur 1 dargestellten Ausführungsbeispiel der erfindungsgemäßen Filteranordnung 1 ist am Oberen Abschlußteil 4 erkennbar, wie eine als Dichtung wirkende elastische Masse 6 vor einem Aushärteprozeß in die zick-zack-förmigen Falten des Filterelements 3 hineingeflossen ist und danach die Faltenstruktur fixiert. Dies bedeutet, daß die elastische Masse 6 bei Temperaturen über 90 °C zunächst erweicht und anschließend verklebt (Schmelz-Reaktions-Kleber). Die elastische Masse 6 ist hier aus Nitrilkautschuk und Phenolharz gebildet, wobei das Mischungsverhältnis im Bereich von 1 : 0,8 bis 1 : 1,5 liegt. Durch einen entsprechend angepaßten thermischen Aushärteprozeß wird gewährleistet, daß eine verbleibende Restelastizität eine ausreichende Dichtwirkung an den Anschlußstellen der Filteranordnung 1 verbleibt. Zusätzlich können eventuell auch weitere Dichtungselemente, wie zum Beispiel Papierringe, in die elastische Masse 6 eingebettet werden um die Dichteigenschaften noch zu verbessern.

Die elastische Masse ist beim Ausführungsbeispiel über die gesamte Stirnfläche der Filteranordnung verteilt und in die konzentrische Öffnung 5 mit einem Innenbereich 7 hineingeführt. Zur optimalen Abdichtung ist es eventuell jedoch ausreichend, wenn nur die Teilbereiche des Abschlußteils 4 mit der elastischen Masse 6 versehen sind, die einem Anschlußteil gegenüberliegen.

In Figur 2 ist ein Teilbereich der Stirnseite der Filteranordnung 1 im Schnitt dargestellt. Hier ist erkennbar, wie die elastische Masse 6 in das zick-zack-förmige Filterelement 3 hineinragt und über einen Innenbereich 7 dichtend an einem Mittelrohr 8, zur Ableitung des gefilterten Mediums, anliegt. Die Abdichtung zu einem stirnseitigen, hier nicht dargestellten Anschlußteil erfolgt ebenfalls über die stirnseitige Oberfläche der elastischen Masse 6.

Mit der Einbringung einer elastischen Masse 6 in das Filterelement 3 ist somit in einfacher Weise aufgrund der verbleibenden Restelastizität eine hervorragende Dichtwirkung und Fixierung des Filterelements 3 gewährleistet.

## Patentansprüche

1. Filteranordnung mit
einem hohlzylindrischen, konzentrisch um eine Zylinderachse zick-zack-förmig gefalteten Filterelement(3) und mit
Dichtungen (4,7) an mindestens einer der Stirnseiten und an radial innenliegenden, an einem Mittelrohr (8) anliegenden Bereichen des Filterelements (3), bei dem
als Dichtung (4,7) an mindestens einer der Stirnseiten des Filterelements (3) eine elastische Masse (6) einbringbar ist, die nach einem Aushärteprozeß eine ausreichende Restelastizität aufweist mit der eine Abdichtung gegenüber dem an die Filteranordnung (1) anfügbaren Mittelrohr (8) und eine Fixierung der zick-zack-förmigen Faltung des Filterelementes (3) erreichbar ist und bei dem
die elastische Masse (6) aus Nitrilkautschuk und Phenolharz gebildet ist, wobei das Mischungsverhältnis im Bereich von 1 : 0,8 bis 1 : 1,5 liegt.

2. Filteranordnung Anspruch 1, **dadurch gekennzeichnet, daß**
in die elastische Masse (6) zusätzliche Dichtungselemente eingebettet sind.

3. Filteranordnung nach einem der Ansprüche 1 oder 3, **dadurch gekennzeichnet, daß**
das Filterelement (3) aus Filterpapier aufgebaut ist.

4. Filteranordnung nach einem der Ansprüche 1 bis 3, **dadurch gekennzeichnet, daß**
die elastische Masse (6) vor dem Aufbringen auf das Filterelement (3) eine gewalzte Folie in Form einer Scheibe ist, wobei sie einen Durchmesser entsprechend dem Endscheiben-Durchmesser des Filterelements (3) aufweist.

5. Filteranordnung nach einem der Ansprüche 1 bis 4, **dadurch gekennzeichnet, daß**
die elastischen Masse (6) gleichzeitig mit der Aushärtung am oberen und am unteren Ende des Filterelements (3) aufgebracht ist.

## Claims

1. Filter arrangement, having a hollow-cylindrical filter element (3), which is concentrically folded in a zigzag-like manner around a cylinder axis, and having seals (4, 7) on at least one of the end faces and on radially internally situated regions of the filter element (3) adjacent a central tube (8), wherein a resilient material (6) is insertable as seal (4, 7) on at least one of the end faces of the filter element (3), which material has, after a hardening process, sufficient residual resilience whereby a sealing relative to the central tube (8), which is attachable to the filter arrangement (1), and a securement of the zigzag-like folding of the filter element (3) are achievable, and wherein the resilient material (6) is formed from nitrile rubber and phenolic resin, the mixture ratio being in the range of between 1 : 0.8 and 1 : 1.5.

2. Filter arrangement according to claim 1, characterised in that additional sealing elements are embedded in the resilient material (6).

3. Filter arrangement according to one of claims 1 or 2, characterised in that the filter element (3) is constructed of filter paper.

4. Filter arrangement according to one of claims 1 to 3, characterised in that, before being applied to the filter element (3), the resilient material (6) is a rolled sheet in the form of a disc, it having a diameter corresponding to the end disc diameter of the filter element (3).

5. Filter arrangement according to one of claims 1 to 4, characterised in that the resilient material (6) is applied simultaneously with the hardening on the upper end and on the lower end of the filter element (3).

## Revendications

1. Ensemble de filtres dans lequel :
- un élément filtrant (3) à plis en accordéon forme un cylindre creux, concentrique à un axe de cylindre et portant des joints d'étanchéité (4, 7) sur au moins une des surfaces frontales et sur des zones situées radialement vers l'intérieur, en contact avec un tube central (8),
- comme joint d'étanchéité (4, 7) sur au moins une des faces frontales de l'élément filtrant (3), on peut utiliser une masse élastique (6) qui, après une opération de durcissement, conserve une élasticité résiduelle suffisante qui permet d'obtenir une étanchéité par rapport au tube central (8) qui peut être emboîté dans l'ensemble de filtrage (1) et d'assurer la fixation des plis en accordéon de l'élément filtrant (3),
- la masse élastique (6) est en caoutchouc nitrile mélangé à une résine phénolique, le rapport du mélange étant compris entre 1:0,8 et 1:1,5.

2. Ensemble de filtres selon la revendication 1,
caractérisé en ce que
dans la masse élastique (6) sont noyés des éléments d'étanchéité supplémentaires.

3. Ensemble de filtres selon la revendication 1 ou 3,
caractérisé en ce que
l'élément filtrant (3) est en papier-filtre.

4. Ensemble de filtres selon l'une des revendications 1 à 3,
caractérisé en ce que
la masse élastique (6), avant son application sur l'élément filtrant (3), est une feuille laminée ayant la forme d'un disque dont le diamètre correspond à celui du disque d'extrémité de l'élément filtrant (3).

5. Ensemble de filtres selon l'une des revendications 1 à 4,
caractérisé en ce que
la masse élastique (6) est déposée, en même temps qu'elle est durcie, sur les extrémités inférieure et supérieure de l'élément filtrant (3).
